(19)

Europäisches
Patentamt
European
Patent Office
Office européen
des brevets

(11) **EP 2 402 079 A1**

(12) **EUROPÄISCHE PATENTANMELDUNG**

(43) Veröffentlichungstag:
**04.01.2012 Patentblatt 2012/01**

(21) Anmeldenummer: 11004543.2

(22) Anmeldetag: **03.06.2011**

(51) Int Cl.:
*B01J 20/26* (2006.01)     *B60K 15/03* (2006.01)
*C08F 291/00* (2006.01)    *C08G 61/12* (2006.01)
*C08J 3/24* (2006.01)      *C08J 9/228* (2006.01)
*F17C 11/00* (2006.01)     *F17C 13/00* (2006.01)

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(30) Priorität: **03.07.2010   DE 102010026044**

(71) Anmelder: **Merck Patent GmbH
64293 Darmstadt (DE)**

(72) Erfinder:
• **Pahnke, Joerg
64285 Darmstadt (DE)**
• **Lennert, Angela
64289 Darmstadt (DE)**

(54) **Verfahren zur Herstellung von Polymernetzwerken**

(57)    Die Erfindung betrifft ein Verfahren zur Herstellung von Polymernetzwerken bzw. Polykondensationsnetzwerken aufgebaut aus ein oder mehreren aromatischen bifunktionellen Friedel-Crafts-aktiven Monomeren sowie deren Verwendung als Speichermedium für Gase. Die Polykondensationsnetzwerke besitzen spezifische Oberflächen $\geq 2000$ $m^2/g$ (nach BET).

EP 2 402 079 A1

**Beschreibung**

Die Erfindung betrifft ein Verfahren zur Herstellung von Polymernetzwerken bzw. Polykondensationsnetzwerken aufgebaut aus ein oder mehreren bifunktionellen Friedel-Crafts-aktiven Monomeren sowie deren Verwendung als Speichermedium für Gase.

Die Speicherung von Gasen, insbesondere von Wasserstoff hat wachsende wirtschaftliche Bedeutung. Materialien, welche die Gase an einer großen Oberfläche adsorbieren können, erlauben die Konstruktion und den Bau von Gastanks ohne Hochdruck- oder Kryotechnik. Dadurch soll die Grundlage für eine Umstellung der heute mit flüssigen Kraftstoff betriebenen Fahrzeuge auf umweltfreundliche oder sogar umweltneutrale gasförmige Kraftstoffe geschaffen werden. Als gasförmige Kraftstoffe mit dem größten bestehenden und zukünftigen wirtschaftlichen und politischen Potential wurden Erdgas/Methan und Wasserstoff identifiziert.

Stand der Technik bei gasbetriebenen Fahrzeugen ist heute die Druckspeicherung in Stahlflaschen und in geringem Umfang in Compositflaschen. Die Speicherung von Erdgas in CNG-Fahrzeugen (Compressed Natural Gas) erfolgt bei einem Druck von 200 bar. Bei den meisten Prototypen von mit Wasserstoff betriebenen Fahrzeugen kommen Druckspeichersysteme mit 350 bar oder in geringem Umfang kryogene Flüssig-Wasserstoffsysteme mit -253°C (20 K) zum Einsatz.

Als Zukunftslösung werden bereits Drucksysteme für 700 bar entwickelt, die eine mit Flüssig-Wasserstoff vergleichbare volumenbezogene Speicherdichte aufweisen. Gemeinsame Merkmale dieser Systeme sind immer noch eine niedrige Volumeneffizienz und ein hohes Gewicht, was die Reichweite der Fahrzeuge auf ca. 350 km (CNG-Fahrzeuge) bzw. 250 km (Wasserstoff-Fahrzeuge) begrenzt. Ferner stellt der hohe Energieaufwand für die Verdichtung und insbesondere für die Verflüssigung einen weiteren Nachteil dar, der die möglichen ökologischen Vorteile gasbetriebener Fahrzeuge schmälert. Zusätzlich muss das Tankdesign der Speicherung bei tiefkalten Temperaturen (20K) durch eine extreme Isolation Rechnung tragen. Da sich eine vollständige Isolierung nicht erzielen lässt, muss man bei solchen Tanks mit einer erheblichen Leckagerate in der Größenordnung von 1-2% pro Tag rechnen. Unter den o.g. energetischen und wirtschaftlichen (Infrastrukturkosten) Aspekten gilt die Druckspeicherung in absehbarer Zukunft als die aussichtsreichste Technik für die gasförmigen Kraftstoffe Erdgas (CNG) und später Wasserstoff.

Eine Erhöhung des Druckniveaus bei CNG über 200 bar hinaus wäre technisch und wirtschaftlich nur schwer vorstellbar, da bereits jetzt eine umfangreiche Infrastruktur und ein schnell wachsender Fahrzeugbestand von z. Zt. ca. 80.000 Autos in Deutschland existieren. Somit bleiben als Lösungsansätze zur Steigerung der Speicherkapazität die Optimierung der Tankgeometrie (Verzicht auf Einzelflaschen, Strukturtank in "Kissenform") und ein zusätzliches, unterstützendes Speicherprinzip, wie Adsorption.

Diesen Lösungsansatz könnte man auch auf Wasserstoff übertragen, wobei hier noch größere Vorteile zu erwarten wären wie bei Erdgas. Grund dafür ist das Realgasverhalten von Wasserstoff (Realgasfaktor Z >1), infolgedessen die physikalische Speicherkapazität nur unterproportional mit dem Druck ansteigt.

Für die Wasserstoffspeicherung werden zur Zeit neben der konventionellen Druckspeicherung im wesentlichen drei Konzepte diskutiert: Kryospeicherung, chemische Speicher und adsorptive Speicherung [siehe L. Zhou, Renew. Sust. Energ. Rev. 2005, 9, 395-408]. Die Kryospeicherung (flüssiger Wasserstoff) ist technisch aufwendig und mit hohen Verdampfungsverlusten verbunden, während die chemische Speicherung mit Hydriden zusätzliche Energie für die Zersetzung des Hydrides erfordert, die häufig im Fahrzeug nicht zur Verfügung steht.

Die chemische Speicherung in Metallhydridspeichern ist bereits sehr weit fortgeschritten. Allerdings entstehen bei der Beladung der Speicher hohe Temperaturen, die beim Betanken in kurzer Zeit abgeführt werden müssen. Bei der Entladung sind dementsprechend hohe Temperaturen notwendig, um den Wasserstoff aus den Hydriden auszutreiben. Beides erfordert den Einsatz von erheblichen Mengen an Energie zur Kühlung/Heizung, was die Effizienz der Speicher verschlechtert. Diese Nachteile werden durch die Thermodynamik der Speicherung verursacht. Hinzu kommt die schlechte Kinetik von Wasserstoffspeichern auf Hydridbasis, was die Betankung in die Länge zieht und die Bereitstellung von Wasserstoff im Fahrbetrieb erschwert. Materialien mit schnellerer Kinetik sind bekannt (z.B. Alanate), aber pyrophor, was einen Einsatz in Kraftfahrzeugen einschränkt.

Eine Alternative stellt die Adsorptionsspeicherung dar. Dabei wird das Gas in den Poren eines nanoporösen Materials adsorbiert. Dadurch wird die Dichte des Gases innerhalb der Pore erhöht. Die Desorption ist zudem mit einem Selbstkühlungseffekt verbunden, der für die adsorptive Kryospeicherung vorteilhaft ist. Die Wärmeströme bei der Ad- und Desorption sind dabei allerdings um ein Vielfaches kleiner als bei Hydriden und stellen daher kein grundsätzliches Problem dar.

Verschiedene Materialklassen kommen aufgrund ihrer hohen spezifischen Oberflächen und ihrer ausgeprägten Mikroporosität grundsätzlich für die Gas- bzw. Wasserstoffspeicherung in Frage:

- Aktivkohlen (siehe Panella et al., Carbon 2005, 43, 2209-2214)
- Kohlenstoff-Nanoröhren (CNT) (siehe Schimmel et al., Chem. Eur. J. 2003, 9, 4764-4770)
- Zeolithe und andere Silikatmaterialien (siehe Jansen et al., Chem. Eur. J. 2007, 13, 3590-3595)

- Metallorganische Gerüstmaterialien (MOFs) (siehe Zao et al., Science 2004, 306, 1012-1015)
- Kovalentorganische Gerüstmaterialien (COF) (siehe El-Kaderi et al., Science 2007, 316, 268-272)
- Polymere intrinsischer Mikroporosität (PIM) (siehe Budd et al., Phys. Chem. Chem. Phys. 2007, 9, 1802-1808)
- Hypervernetzte Polymere (HCP) (siehe Budd et al., Phys. Chem. Chem. Phys. 2007, 9, 1802-1808)

Aktivkohlen mit optimierter Porengeometrie erzielen durch Physisorption von Wasserstoff Messergebnisse von 45, 0 g $H_2$/kg bei 70 bar (siehe Carbon 2005, 43, 2209-2214). Für andere, von Carbidverbindungen abgeleitete, hochporöse Kohlenstoffmaterialien (CDC) werden derzeit Speicherkapazitäten im Bereich von 30 g $H_2$/kg bzw. 24 g $H_2$/kg bei 1 bar beschrieben (siehe Adv. Funct. Mater. 2006, 16, 2288-2293). Für Zeolithe wurden Werte von 18,1 g $H_2$/kg bei 15 bar gemessen (siehe J. Alloys Compd. 2003, 356-357, 710-715). Hohe gravimetrische Speichermaterialien von 75 für MOF-177 und 67 g $H_2$/kg für IRMOF-20 im Druckbereich von 70-80 bar wurden veröffentlicht (siehe Zao et al., Science 2004, 306, 1012-1015 und Yaghi et al., J. Mater. Chem. 2007, 17, 3197-3204 sowie Yaghi et al., J. Am. Chem. Soc. 2006, 128, 3494-3495).

Die zuletzt genannten MOFs bzw. metallorganischen Netzwerke können zwar die Speicherkapazität eines Tanks deutlich erhöhen, haben allerdings den Nachteil, dass sie nur eine begrenzte chemische Beständigkeit aufweisen. So sind viele dieser Materialien äußerst feuchtigkeitsempfindlich.

Eine Alternative stellen hochmikroporöse polymere Netzwerke dar, welche mit geringen synthetischen Aufwand hergestellt werden können und eine ausreichende chemische Stabilität aufweisen.

Bisher werden hochporöse Polymermaterialien durch starke Vernetzung (Hypervernetzung) gequollener, leicht vernetzter Polymerpartikel, insbesondere basierend auf Polystyrol, hergestellt (siehe Davankov et al., Reactive & Functional Polymers 2002, 53, 193-203). Bei diesen sogenannten *Davankov-Netzwerken* wird grundsätzlich zwischen gelartigen und makroporösen Precursorpolymeren unterschieden (siehe Sherrington, Chem. Commun. 1998, 2275-2286), die über Suspensionspolymerisation in Wasser dargestellt werden und im trockenen Zustand als feindisperse Pulver vorliegen. Aufgrund ihres niedrigen Vernetzeranteils (unter 20 Mol %) besitzen die gelartigen Davankov-Netzwerke eine geringe mechanische Stabilität im gequollen Zustand, was ihre Anwendung einschränkt. Bei diesen Netzwerken lassen sich durch Hypervernetzung zwar recht hohe spezifische Oberflächen erzeugen, allerdings ist für Gasspeicherzwecke nicht alleine die Gesamtoberfläche entscheidend, sondern insbesondere der Anteil, der von Poren im (Ultra)mikroporenbereich von 0,5 bis 2 nm ausgeht. Somit ist die Speicherkapazität dieser bekannten Materialien für eine kommerzielle Nutzung noch nicht ausreichend, weswegen eine Erhöhung der Aufnahmefähigkeit für Methan und Wasserstoff ein wichtiges Forschungsziel darstellt.

Cooper et al, (Chem. Mater. 2007, 19, 2034-2048 sowie Adv. Mater. 2008, 20, 1916-1921) beschreiben ein Verfahren zur Herstellung von Polykondensationsnetzwerken, die spezifische Oberflächen von 600 bis 1904 m$^2$/g (nach BET) aufweisen.

Aufgabe der vorliegenden Erfindung war es daher, ein Verfahren zur Herstellung von Polymernetzwerken bzw. Polykondensationsnetzwerken bereitzustellen, welche eine höhere Speicherkapazität für Methan und Wasserstoff gegenüber herkömmlichen Materialien besitzen beziehungsweise den Strukturaufbau (d.h. spezifische Oberfläche und Porengeometrie) von Polykondensationsnetzwerken verbessern.

Überraschenderweise wurde jetzt gefunden, dass die Reaktionsbedingungen der Friedel-Crafts-Alkylierung durch Variation von Reaktionstemperatur, Lösungsmittel sowie ggf. der Reaktionszeit so verändert werden können, dass hierdurch Polymernetzwerke erhalten werden, die eine spezifische Oberfläche (nach BET) ≥2000 m$^2$/g erzielen. Diese Polykondensationsnetzwerke haben den weiteren Vorteil, dass sie robust sind, d.h. sie sind unempfindlich gegenüber Feuchtigkeit und thermisch stabil. Des Weiteren sind sie in Eintopfverfahren leicht herzustellen.

Gegenstand der vorliegenden Erfindung ist somit ein Verfahren zur Herstellung eines Polykondensationsnetzwerkes, wobei ein oder mehrere aromatische bifunktionelle Friedel-Crafts-aktive Monomere in einem organischen oder anorganischen Lösungsmittel gelöst und mit einer Lewis-Säure (Katalysator) versetzt werden, dadurch gekennzeichnet, dass die Reaktion bei einer Temperatur ≤ 75°C, vorzugsweise zwischen 30 bis 50 °C durchgeführt wird.

Unter "Friedel-Crafts-aktiven Verbindungen" versteht man erfindungsgemäß aromatische Verbindungen, die unter katalytischer Wirkung einer Lewis-Säure (wie z.B. FeCl$_3$) über eine intermolekulare Vernetzungsreaktion zu Polykondensationsnetzwerken reagieren.

Die erfindungsgemäßen Monomere müssen bifunktionell sein, damit eine intermolekulare Netzwerkbildung erfolgen kann.

Vorzugsweise wird als aromatisches bifunktionelles Friedel-Crafts-aktives Monomer ein alkylhalogenid-bisubstituiertes Friedel-Crafts-aktives Monomer eingesetzt.

Vorzugsweise werden als Monomere alkylhalogenid-bisubstituierte Friedel-Crafts-aktive Verbindungen, noch bevorzugter Verbindungen der Formel 1

$$Y- Ar - Z \quad (I)$$

wobei

Ar aromatische Systeme wie Benzol-Reste, Biphenyl-Reste, kondensierte aromatische Ringsystem wie Naphthalin-Reste, Anthracen-Reste, Fluoren-Reste, Phenanthren-Reste, Tetracen-Reste, Pyren-Reste, wobei die aromatischen Systeme jeweils auch ein- oder mehrfach substituiert sein können.

Y und Z unabhängig voneinander Alkylhalogenid-Reste, vorzugsweise Alkylchlorid-Reste sein können, eingesetzt.

Die Kettenlänge der Alkylhalogenid-Reste beträgt von 1 bis 18, vorzugsweise 1 bis 3. Die Alkylhalogenid-Reste können auch verzweigt sein z.B. als 1,4-Bis-(1-chlor-1-methyl-ethyl)-biphenyl oder 1,4-Bis-(1-chlorethyl)-biphenyl.

Als Substituenten der aromatischen Systeme kommen Sulfongruppen, Alkylgruppen (von C1 bis C4 linear oder verzweigt) und Carbonsäuregruppen in Frage. Als Beispiele für Alkyl-substituierte Aromaten wären 4,4'-Bis-chloromethyl-2,3,5,6-tetramethyl-biphenyl oder 4,4-Bis-chloromethyl-2,5-dimethyl-biphenyl zu nennen. Als Beispiel für Carboxyl-substituierte Aromaten käme 4,4'-Bis-chloromethyl-6-methyl-biphenyl-3-carbonsäure in Frage und als Beispiel für einen mit einer Sulfongruppe substituierten Aromaten käme 4,4'-Bis-chloromethyl-6-methyl-biphenyl-3-sulfonsäure in Frage.

Bevorzugt sind Monomere mit mindestens zwei aromatischen Chlormethylfunktionen, vorzugsweise 4,4'-Bis(chlormethyl)-1,1'-biphenyl, 1,4-Bis(chlormethyl)benzol und/oder 9,10-Bis(chlormethyl)anthracen, besonders bevorzugt 4,4'-Bis(chlormethyl)-1,1-biphenyl (BCMBP) eingesetzt.

Als zentrale Reaktion zur Herstellung von Polykondensationsnetzwerken dient erfindungsgemäß die bekannte Friedel-Crafts-Alkylierung. Hierbei erfolgen Aufbau und Vernetzung des Polymers in einem Schritt mittels einer Polykondensationsreaktion (siehe Cooper et al., Chem. Mater. 2007,19, 2034-2048).

Die über diese Polykondensation erhaltenen Materialien können auch als Fällungspolymere bezeichnet werden, da die wachsenden, stark vernetzten Ketten ab einem bestimmten Polymerisationsgrad einer Phasentrennung unterliegen und ausfallen.

Als Katalysator der Reaktion können erfindungsgemäß Lewis-Säuren wie $FeCl_3$, $AlCl_3$, $ZnCl_2$ oder $SnCl_4$ oder deren Gemische eingesetzt werden. Erfindungsgemäß bevorzugt sind $FeCl_3$ oder $AlCl_4$, wobei $FeCl_3$ besonders bevorzugt ist.

Die Friedel-Crafts-Alkylierung ist thermisch initiiert und verläuft erfindungsgemäß bei Temperaturen ≤75 °C in flüssiger Phase, vorzugsweise ≤70 °C, noch bevorzugter ≤60 °C, am bevorzugtesten zwischen 30 und 50 °C. Es ist wichtig ein Lösungsmittel zu verwenden, welches einerseits das entstehende Polymer ausreichend löst (aufquillt) und andererseits inert gegenüber der Friedel-Crafts-Reaktion ist (keine Aromaten). Als geeignetes organisches Lösungsmittel wird bevorzugt ein chloriertes Lösungsmittel noch bevorzugter 1,2-Dichlor-methan verwendet, aber auch die Verwendung von 1,2 Dichlor-ethan oder Hexan ist möglich. Als Lösungsmittel können erfindungsgemäß auch Salzschmelzen, vorzugsweise ionische Flüssigkeiten auf der Basis von substituierten Imidazolin-, Pyrrolidinium- und Pyridiniumsalzen verwendet werden.

Die Reaktionszeit der Polykondensation beträgt erfahrungsgemäß etwa 1 bis 6 Stunden, vorzugsweise etwa 5 Stunden.

Die erfindungsgemäßen Polykondensationsnetzwerke fallen in der Regel als feindisperse braune Pulver an.

Die Größe der Poren sowie der Porenverbindungen lässt sich erfindungsgemäß über die Syntheseparameter steuern. Der Spielraum zur Einstellung der Poren ist hierbei wesentlich größer als bei ähnlichen anorganischen Systemen wie z.B. den Zeolithen.

Der Anteil an Mikroporenvolumen (bezogen auf das Gesamtporenvolumen) bei den erfindungsgemäßen Polykondensationsnetzwerken liegt zwischen 50 bis 90 %. Neben den Mikroporen scheinen im Material auch Mesoporen vorhanden zu sein.

Die spezifische Oberfläche, wie sie gemäß BET (Brunauer, Emmett, Teller, J. Am. Chem. Soc 1938, 60, 309) nach der sog. 5-Punkt-Methode, Fa. Micromeritics, ASAP 2420 berechnet worden ist, beträgt für die erfindungsgemäßen Polykondensationsnetzwerke ≥2000 $m^2$/g. Bevorzugt liegt sie zwischen 2400 $m^2$/g und 3000 $m^2$/g.

Gegenüber den bekannten Polykondensationsnetzwerken (hergestellt aus 100% BCMBP-Monomer, siehe Cooper et al. Adv. Mater. 2008, 20, 1916-1921) mit gravimetrischen Speicherdichten bis 5.5 mmol/g Methan (bei 35 bar), konnten erfindungsgemäß nach dem gleichen Verfahren gravimetrische Speicherdichten > 6 mmol/g Methan, vorzugsweise etwa 7 mmol/g Methan (35 bar Druck, siehe Beispiel 1) erreicht werden.

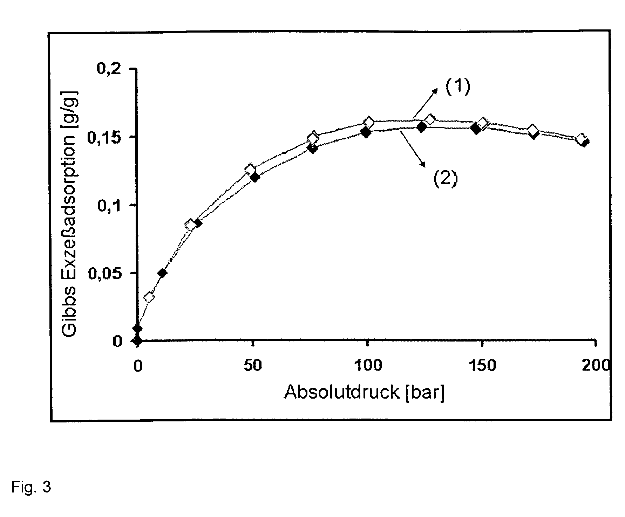

Die Hochdruck-Methan-Sorptionsmessung (siehe Fig.3) erfolgt mit Hilfe einer Magnetschwebewaage (Fa. Rubotherm Co.) *[siehe* Senkovska, Kaskel, Microporous Mesoporous Materials, 2008, 112, 108-115*]*

Ein weiterer Gegenstand der vorliegenden Erfindung ist ein Polykondensationsnetzwerk erhältlich durch Umsetzung eines oder mehrerer aromatischer, bifunktioneller Friedel-Crafts-aktiver Monomere mit einer Lewis-Säure bei einer Temperatur ≤75°C. Vorzugsweise beträgt die Reaktionszeit 1 bis 6 Stunden, noch bevorzugter etwa 5 Stunden. Bevorzugt hat das erfindungsgemäße Polykondensationsnetzwerk eine spezifische Oberfläche ≥2000 m$^2$/g, noch bevorzugter zwischen 2400 und 3000 m$^2$/g. Der Anteil an Mikroporenvolumen (bezogen auf das Gesamtporenvolumen) liegt bevorzugt zwischen 50 bis 90%. Weiterhin besitzt das erfindungsgemäße Polykondensationsnetzwerk eine gravimetrische Speicherdichte von etwa 7 mmol/g Methan (35 bar Druck).

Weiterhin betrifft die vorliegende Erfindung eine Vorrichtung zur Aufnahme und/oder zum Speichern und/oder zur Abgabe von mindestens einem Gas, enthaltend das erfindungsgemäße Polykondensationsnetzwerk.

Die erfindungsgemäße Vorrichtung kann die folgenden weiteren Komponenten enthalten:

- einen Behälter, der das Polykondensationsnetzwerk aufnimmt:
- eine Öffnung zur Zu- oder Abfuhr, die es zumindest einem Gas erlaubt, in die Vorrichtung oder aus der Vorrichtung zu gelangen:
- ein gasdichter Aufnahmemechanismus, der dazu in der Lage ist, das Gas unter Druck innerhalb des Containers zu halten.

Ein weiterer Gegenstand der vorliegenden Erfindung ist eine stationäre oder mobile oder mobil tragbare Einrichtung, die die erfindungsgemäße Vorrichtung umfasst.

Ein weiterer Gegenstand der vorliegenden Erfindung ist die Verwendung der erfindungsgemäßen Polykondensationsnetzwerke als Gasspeichermaterial. In einer bevorzugten Ausführungsform werden die erfindungsgemäßen Polykondensationsnetzwerke zur Speicherung von Wasserstoff und Erdgas, vorzugsweise Methan, eingesetzt.

Die folgenden Beispiele sollen die vorliegende Erfindung verdeutlichen. Sie sind jedoch keinesfalls als limitierend zu betrachten. Alle Verbindungen oder Komponenten, die in den Zubereitungen verwendet werden können, sind entweder bekannt und käuflich erhältlich oder können nach bekannten Methoden synthetisiert werden. Die in den Beispielen angegebenen Temperaturen gelten immer in °C. Es versteht sich weiterhin von selbst, dass sich sowohl in der Beschreibung als auch in den Beispielen die zugegebenen Mengen der Komponenten in den Zusammensetzungen immer zu insgesamt 100% addieren. Gegebene Prozentangaben sind immer im gegebenen Zusammenhang zu sehen. Sie beziehen sich üblicherweise aber immer auf die Masse der angegebenen Teil- oder Gesamtmenge.

### 1. Herstellung der Polykondensationsnetzwerke auf Basis von 4,4'-Bis(chlormethyl)-1,1'-biphenyl (BCMBP)

In einem 250 ml Dreihalskolben - ausgestattet mit Rückflusskühler, KGP-Rührer und Vakuum-Rührhülse - werden 10,0 g (39,8 mmol) des Monomers BCMBP in 50 ml Dichlormethan (destilliert) gelöst und die Apparatur im Argon-Strom inertisiert. Dies entspricht einer Monomermassenkonzentration von 200 mg/ml (20,0 Gew/Vol.%). Anschließend werden 6,458 mg (39,8 mmol) des Katalysator $FeCl_3$ in 4 ml Dichlormethan angeschlämmt und schnellstmöglich zur Reaktionsmischung bei einer Rührgeschwindigkeit von 330 U/min zugegeben. Anschließend wird die Reaktionsmischung auf 40 °C Ölbadtemperatur geheizt (Innentemperatur des Reaktionsgemisches 35 - 40 °C) und für 5 h bei dieser Temperatur geführt. Das Ausfallen eines schwarz-braunen Niederschlags ist zu beobachten. Nach beendigter Reaktion wird auf Raumtemperatur abgekühlt und der Niederschlag auf einer Nutsche gewaschen (1000 ml Wasser, 1000 ml Methanol und 500 ml t-Butylmethylether), bis die ablaufende Mutterlauge farblos ist. Anschließend wird abgesaugt und im Trockenschrank unter Vakuum bei 80°C für 24 h bis zur Massekonstanz getrocknet.

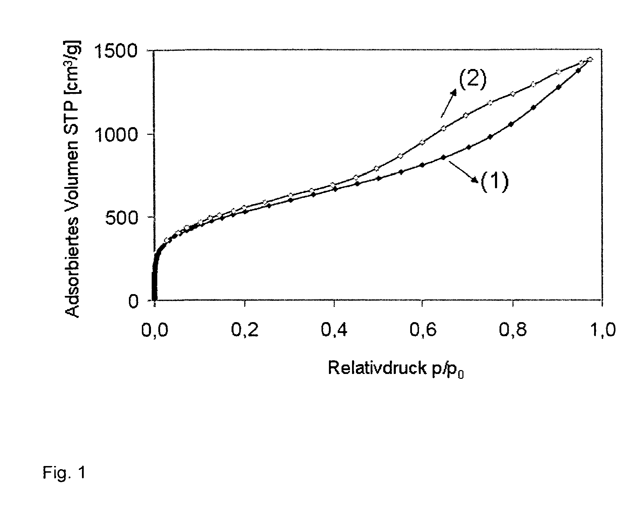

Zur Bestimmung der spezifischen Oberfläche nach der BET-Methode (Brunauer, Emmett, Teller, J. Am. Chem. Soc 1938, 60, 309) wird die Probe für 5 h bei 200°C im Vakuum ausgeheizt, um mögliche Restfeuchtigkeit aus dem Netzwerk zu entfernen. Anschließend wird die Oberfläche nach der oben genannten BET-Methode (sog. 5-Punkt-Methode, Fa. Micromeritics, ASAP 2420) zu 2473 m$^2$/g bestimmt. Fig. 1 zeigt die zugehörige Stickstoff-Sorptionsisotherme.

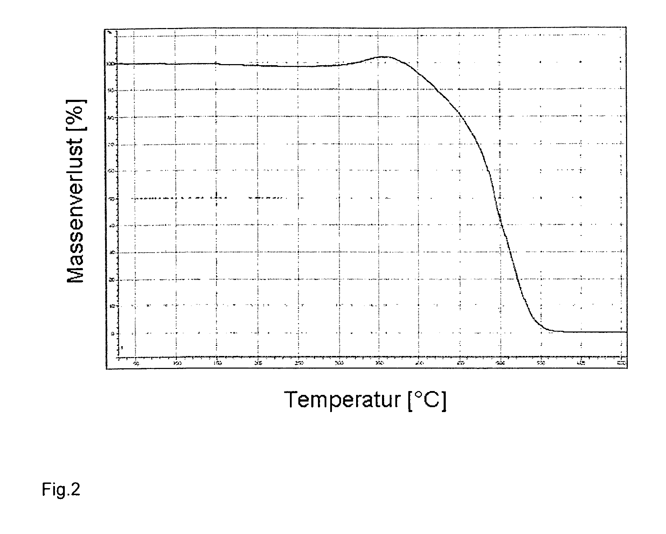

Die thermogravimetrische Analyse des o.g. Polykondensationsnetzwerks erfolgte unter Sauerstoff, wobei es eine Temperaturbeständigkeit bis 350°C zeigt. Die Messung erfolgt im Messtiegel in Differenzwägung zu einem leeren Tiegel (Water, TA Instruments) unter Luftsauerstoff bei Heizrate: 10K/min, 20-800 °C). (siehe Fig. 2)

Die Hochdruck-Methan-Sorptionsmessung (siehe Fig. 3) erfolgt mit Hilfe einer Magnetschwebewaage (Fa. Rubotherm Co) *[siehe* Senkovska, Kaskel, Microporous Mesoporous Materials 2008, 112, 108-115*].*

### Abbildungsverzeichnis

Fig. 1: Stickstoff-Sorptionsisotherme des Polykondensationsnetzwerks gemäß Beispiel 1 (Absorption: (1); Desorption: (2))

Fig.2 Thermogravimetrische Analyse des Polykondensationsnetzwerks unter Sauerstoff nach Beispiel 1, welches eine Temperaturbeständigkeit bis 350 °C zeigt. Die Messung erfolgt im Messtiegel in Differenzwägung zu einem leeren Tiegel (Water, TA Instruments) unter Luftsauerstoff; Heizrate: 10 K/min, 20-800°C)

Fig. 3. Sorptionsisotherme von Methan des Polykondensationsnetzwerks nach Beispiel 1 (Absorption: (2); Desorption: (1)) Die Hochdruck-Methan-Sorptionsmessung erfolgt mit Hilfe einer Magnetschwebewaage (Fa. Rubotherm Co) *[siehe* Senkovska, Kaskel, Microporous Mesoporous Materials 2008, 112, 108-115*]*

**Patentansprüche**

1. Verfahren zur Herstellung eines Polykondensationsnetzwerkes, wobei ein oder mehrere aromatische bifunktionelle Friedel-Crafts-aktive Monomere in mindestens einem organischen oder anorganischen Lösungsmittel gelöst und mit mindestens einer Lewis-Säure (Katalysator) versetzt werden, **dadurch gekennzeichnet, dass** die Reaktion bei einer Temperatur ≤ 75 °C durchgeführt wird.

2. Verfahren nach Anspruch 1, **dadurch gekennzeichnet, dass** die Reaktion bei einer Temperatur von 30 bis 50 °C durchgeführt wird.

3. Verfahren nach Anspruch 1 und/oder 2, **dadurch gekennzeichnet, dass** die Reaktionszeit 1 bis 6 Stunden beträgt.

4. Verfahren nach einem oder mehreren der Ansprüche 1 bis 3, **dadurch gekennzeichnet, dass** als aromatisches bifunktionelles Friedel-Crafts-aktives Monomer ein alkylhalogenid-bisubstituiertes Friedel-Crafts-aktives Monomer eingesetzt wird.

5. Verfahren nach einem oder mehreren der Ansprüche 1 bis 4, **dadurch gekennzeichnet, dass** als alkylhalogenid-bisubstituiertes Friedel-Crafts-aktives Monomer eine Verbindung der allgemeinen Formel 1

$$Y-Ar-Z \qquad (I)$$

wobei
Ar aromatische Systeme wie Benzol-Reste,
Biphenyl-Reste, kondensierte aromatische Ringsysteme wie Naphthalin-Reste, Anthracen-Reste, Fluoren-Reste, Phenanthren-Reste, Tetracen-Reste, Pyren-Reste, wobei die aromatischen Systeme jeweils auch ein-oder mehrfach substituiert sein können Y und Z unabhängig voneinander Alkylhalogenid-Reste,
vorzugsweise Alkylchlorid-Reste sein können.
eingesetzt wird.

6. Verfahren nach einem oder mehreren der Ansprüche 1 bis 5, **dadurch gekennzeichnet, dass** das Monomer 4,4'-Bis(chlormethyl)-1,1'-biphenyl, 1,4-Bis(chlormethyl) benzol und/oder 9,10-Bis(chlormethyl)anthracen, vorzugsweise 4,4'-Bis(chlormethyl)-1,1'-biphenyl ist.

7. Verfahren nach einem oder mehreren der Ansprüche 1 bis 6, **dadurch gekennzeichnet, dass** als Lewis-Säure (Katalysator) $FeCl_3$, $AlCl_3$, $ZnCl_2$ oder $SnCl_4$ oder deren Gemische eingesetzt werden.

8. Verfahren nach einem oder mehreren der Ansprüche 1 bis7, **dadurch gekennzeichnet, dass** als organisches oder anorganisches Lösungsmittel chlorierte Lösungsmittel wie 1,2-Dichlormethan und/oder Salzschmelzen, vorzugsweise ionische Flüssigkeiten auf Basis von substituierten Imidazolin-, Pyrrolidinium- oder Pyridiniumsalzen eingesetzt werden.

9. Polykondensationsnetzwerk erhältlich durch Umsetzung eines oder mehrerer aromatischer, bifunktioneller Friedel-Crafts-aktiver Monomere mit einer Lewis-Säure bei einer Temperatur ≤ 75°C.

10. Polykondensationsnetzwerk nach Anspruch 9, **dadurch gekennzeichnet, dass** die Reaktionszeit 1 bis 6 Stunden beträgt.

11. Polykondensationsnetzwerk nach Anspruch 9 oder 10, **dadurch gekennzeichnet, dass** es eine spezifische Ober-

fläche (nach BET) ≥ 2000 m$^2$/g besitzt.

12. Polykondensationsnetzwerk nach einem oder mehreren der Ansprüche 9 bis 11, **dadurch gekennzeichnet, dass** die gravimetrische Speicherdichte ≥ 6.0 mmol/g Methan (35 bar) beträgt.

13. Vorrichtung zur Aufnahme und/oder zum Speichern und/oder zur Abgabe von mindestens einem Gas, enthaltend ein Polykondensationsnetzwerk nach einem oder mehreren der Ansprüche 9 bis 12 oder ein Polykondensationsnetzwerk hergestellt nach einem Verfahren nach einem oder mehreren der Ansprüche 1 bis 8.

14. Vorrichtung nach Anspruch 13, **dadurch gekennzeichnet, dass** sie außerdem einen Behälter enthält, welcher das Polykondensationsnetzwerk aufnimmt; eine Öffnung bzw. einen Auslass, der es ermöglicht, dass das mindestens eine Gas in die oder aus der Vorrichtung gelangt; einen gasdichten Aufnahme-Mechanismus, der dazu in der Lage ist, das Gas unter Druck innerhalb des Behältnisses zu halten.

15. Stationäre oder mobile oder mobil tragbare Einrichtung enthaltend eine Vorrichtung nach Anspruch 13 und/ oder 14.

16. Verwendung von Polykondensationsnetzwerken nach Anspruch 9 bis 12 oder hergestellt nach einem Verfahren nach einem oder mehreren der Ansprüche 1 bis 8 als Speichermedium für Gase.

Fig. 1

Temperatur [°C]

Fig.2

Fig. 3

Europäisches
Patentamt

European
Patent Office

Office européen
des brevets

# EUROPÄISCHER RECHERCHENBERICHT

Nummer der Anmeldung

EP 11 00 4543

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 5 580 948 A (NEUFELD ECKHARD [DE] ET AL) 3. Dezember 1996 (1996-12-03) * Absatz [0001] - Absatz [0079]; Ansprüche 1-35; Beispiele * ----- | 1-16 | INV. B01J20/26 B60K15/03 C08F291/00 C08G61/12 |
| X | US 4 843 131 A (BECKER PAUL [US] ET AL) 27. Juni 1989 (1989-06-27) * Spalte 1, Zeile 8 - Spalte 11, Zeile 33; Ansprüche 1-25; Beispiele * ----- | 1-16 | C08J3/24 C08J9/228 F17C11/00 F17C13/00 |
| X | US 4 912 195 A (JANSONS VIKTORS [US] ET AL) 27. März 1990 (1990-03-27) * Spalte 1, Zeile 18 - Spalte 16, Zeile 9; Ansprüche 1-45; Beispiele * ----- | 1-16 | |
| X | EP 0 149 092 A1 (BAYER AG [DE]) 24. Juli 1985 (1985-07-24) * Seite 7, Zeile 8; Ansprüche 1-5; Beispiele * ----- | 1-16 | |
| X | US 3 265 640 A (OVERHULTS WENDELL C ET AL) 9. August 1966 (1966-08-09) * Spalte 1, Zeile 10 - Spalte 7, Zeile 20; Ansprüche 1-8; Beispiele * ----- | 1-16 | RECHERCHIERTE SACHGEBIETE (IPC) B01J B60K C08F C08G C08J F17C |
| X | JOU-HYEON AHN ET AL: "Rapid Generation and Control of Microporosity, Bimodal Pore Size Distribution, and Surface Area in Davankov-Type Hyper-Cross-Linked Resins", MACROMOLECULES, Bd. 39, Nr. 2, 1. Januar 2006 (2006-01-01) , Seiten 627-632, XP055011597, ISSN: 0024-9297, DOI: 10.1021/ma051152n * Seite 627 - Seite 632 * ----- -/-- | 1-16 | |

Der vorliegende Recherchenbericht wurde für alle Patentansprüche erstellt

| Recherchenort | Abschlußdatum der Recherche | Prüfer |
|---|---|---|
| Den Haag | 11. November 2011 | Kiebooms, Rafaël |

EPO FORM 1503 03.82 (P04C03)

Europäisches
Patentamt

European
Patent Office

Office européen
des brevets

## EUROPÄISCHER RECHERCHENBERICHT

Nummer der Anmeldung

EP 11 00 4543

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | JUN-YOUNG LEE ET AL: "Hydrogen adsorption in microporous hypercrosslinked polymers", CHEMICAL COMMUNICATIONS, Nr. 25, 1. Januar 2006 (2006-01-01), Seiten 2670-2672, XP055011601, ISSN: 1359-7345, DOI: 10.1039/b604625h * Seite 2670 - Seite 2672 * | 1-16 | |
| Y | COLIN D. WOOD ET AL: "Hydrogen Storage in Microporous Hypercrosslinked Organic Polymer Networks", CHEMISTRY OF MATERIALS, Bd. 19, Nr. 8, 1. April 2007 (2007-04-01), Seiten 2034-2048, XP055011738, ISSN: 0897-4756, DOI: 10.1021/cm070356a * Seite 2034 - Seite 2048 * | 1-16 | |
| Y | DE 10 2008 006874 A1 (MERCK PATENT GMBH [DE]) 6. August 2009 (2009-08-06) * Absatz [0001] - Absatz [0056]; Ansprüche 1-18; Beispiele * | 1-16 | RECHERCHIERTE SACHGEBIETE (IPC) |
| Y | DE 10 2008 011189 A1 (MERCK PATENT GMBH [DE]) 27. August 2009 (2009-08-27) * Absatz [0001] - Absatz [0045]; Ansprüche 1-21; Beispiele * | 1-16 | |

Der vorliegende Recherchenbericht wurde für alle Patentansprüche erstellt

| Recherchenort | Abschlußdatum der Recherche | Prüfer |
|---|---|---|
| Den Haag | 11. November 2011 | Kiebooms, Rafaël |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus anderen Gründen angeführtes Dokument

..........................................................................

& : Mitglied der gleichen Patentfamilie, übereinstimmendes
  Dokument

EPO FORM 1503 03.82 (P04C03)

EP 2 402 079 A1

**ANHANG ZUM EUROPÄISCHEN RECHERCHENBERICHT
ÜBER DIE EUROPÄISCHE PATENTANMELDUNG NR.**

EP 11 00 4543

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-11-2011

| Im Recherchenbericht angeführtes Patentdokument | Datum der Veröffentlichung | Mitglied(er) der Patentfamilie | Datum der Veröffentlichung |
|---|---|---|---|
| US 5580948 A | 03-12-1996 | CA 2129789 A1<br>DE 4326774 A1<br>EP 0638603 A2<br>JP 7138361 A<br>US 5580948 A | 11-02-1995<br>16-02-1995<br>15-02-1995<br>30-05-1995<br>03-12-1996 |
| US 4843131 A | 27-06-1989 | KEINE | |
| US 4912195 A | 27-03-1990 | KEINE | |
| EP 0149092 A1 | 24-07-1985 | DE 3345446 A1<br>EP 0149092 A1<br>JP 60141713 A<br>US 4745176 A | 27-06-1985<br>24-07-1985<br>26-07-1985<br>17-05-1988 |
| US 3265640 A | 09-08-1966 | FR 1429557 A<br>US 3265640 A | 25-02-1966<br>09-08-1966 |
| DE 102008006874 A1 | 06-08-2009 | DE 102008006874 A1<br>EP 2247365 A1<br>US 2010326847 A1<br>WO 2009095153 A1 | 06-08-2009<br>10-11-2010<br>30-12-2010<br>06-08-2009 |
| DE 102008011189 A1 | 27-08-2009 | DE 102008011189 A1<br>EP 2247640 A1<br>US 2011030555 A1<br>WO 2009106198 A1 | 27-08-2009<br>10-11-2010<br>10-02-2011<br>03-09-2009 |

EPO FORM P0461

Für nähere Einzelheiten zu diesem Anhang : siehe Amtsblatt des Europäischen Patentamts, Nr.12/82

13

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **L. ZHOU.** *Renew. Sust. Energ. Rev.,* 2005, vol. 9, 395-408
- **PANELLA et al.** *Carbon,* 2005, vol. 43, 2209-2214
- **SCHIMMEL et al.** *Chem. Eur. J.,* 2003, vol. 9, 4764-4770
- **JANSEN et al.** *Chem. Eur. J.,* 2007, vol. 13, 3590-3595
- **ZAO et al.** *Science,* 2004, vol. 306, 1012-1015
- **EL-KADERI et al.** *Science,* 2007, vol. 316, 268-272
- **BUDD et al.** *Phys. Chem. Chem. Phys.,* 2007, vol. 9, 1802-1808
- *Carbon,* 2005, vol. 43, 2209-2214
- *Adv. Funct. Mater.,* 2006, vol. 16, 2288-2293
- *J. Alloys Compd.,* 2003, vol. 356-357, 710-715
- **YAGHI et al.** *J. Mater. Chem.,* 2007, vol. 17, 3197-3204
- **YAGHI et al.** *J. Am. Chem. Soc.,* 2006, vol. 128, 3494-3495
- **DAVANKOV et al.** *Reactive & Functional Polymers,* 2002, vol. 53, 193-203
- **SHERRINGTON.** *Chem. Commun.,* 1998, 2275-2286
- *Chem. Mater.,* 2007, vol. 19, 2034-2048
- *Adv. Mater.,* 2008, vol. 20, 1916-1921
- **COOPER et al.** *Chem. Mater.,* 2007, vol. 19, 2034-2048
- **BRUNAUER ; EMMETT ; TELLER.** *J. Am. Chem. Soc,* 1938, vol. 60, 309
- **COOPER et al.** *Adv. Mater.,* 2008, vol. 20, 1916-1921
- **SENKOVSKA ; KASKEL.** *Microporous Mesoporous Materials,* 2008, vol. 112, 108-115